(19) Europäisches Patentamt
European Patent Office
Office européen des brevets

(11) EP 3 877 166 B1

(12) # EUROPEAN PATENT SPECIFICATION

(45) Date of publication and mention of the grant of the patent:
**04.01.2023 Bulletin 2023/01**

(21) Application number: **19808922.9**

(22) Date of filing: **08.11.2019**

(51) International Patent Classification (IPC):
***B29D 35/12*** (2010.01) ***B60C 1/00*** (2006.01)

(52) Cooperative Patent Classification (CPC):
**B60C 1/0016; B29D 35/122**

(86) International application number:
**PCT/JP2019/043794**

(87) International publication number:
**WO 2020/096026 (14.05.2020 Gazette 2020/20)**

(54) **AN ARTICLE, IN PARTICULAR A TIRE**

ARTIKEL, INSBESONDERE EIN REIFEN

ARTICLE, EN PARTICULIER PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2018 JP 2018210173**

(43) Date of publication of application:
**15.09.2021 Bulletin 2021/37**

(73) Proprietor: **COMPAGNIE GENERALE DES ETABLISSEMENTS MICHELIN**
**63000 Clermont-Ferrand (FR)**

(72) Inventors:
- **CANTAGREL, Guillaume**
  **Tokyo 163-1073 (JP)**
- **PROU, Joris**
  **Tokyo 163-1073 (JP)**
- **ENDERLIN, Alexandre**
  **Tokyo 163-1073 (JP)**

(74) Representative: **Wroblewski, Nicolas Paul André**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) References cited:
**WO-A1-2018/151305 US-A1- 2014 228 459**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 877 166 B1

## Description

[Technical Field]

The field of the invention is that of articles, for example, tires, shoes, conveyors or caterpillar tracks, in particular for tire treads.

[Background Art]

Use of such articles can make noise which can cause people psychological discomfort, can be a source of irritation and stress, and can cause conditions such as headaches and hearing loss, and as a result, a variety of countermeasures have been proposed.

[Citation List]

[Patent Literature]

[PTL 1]
WO 2010/069510

It is known that the noise emitted by an article, for example, a tire, when running originates, inter alia, from the vibrations of its structure resulting from the contact of the article with the irregularities of the roadway, also bringing about generation of various sound waves.

Everything is ultimately manifested in the form of noise, both inside and outside the vehicle. The amplitude of these various manifestations depends on the modes of vibration specific to the tire and also on the nature of the surface on which the vehicle is moving. The range of frequencies corresponding to the noise generated by the tires typically extends from 20 to 4000 Hz approximately.

As regards the noise noticed inside the vehicle, two methods of propagation of the sound coexist:

- the vibrations are transmitted via the wheel center, the suspension system and the transmission in order to finally generate noise in the passenger compartment; reference is then made to "structure-borne transmission", which is generally dominant for low frequencies of the spectrum (up to approximately 400 Hz);
- the sound waves emitted by the tire are directly propagated by the aerial route within the vehicle, the latter acting as filter; reference is then made to "aerial transmission", which generally dominates in the high frequencies (approximately 600 Hz and above).

The noise referred to as "road noise" instead describes the overall level of noise noticed in the vehicle and within a frequency range extending up to 2000 Hz. The noise referred to as "cavity noise" describes the nuisance due to the resonance of the inflation cavity of the casing of the tire.

As regards the noise emitted outside the vehicle, the various interactions between the tire and the road surface, and the tire and the air, which will be a nuisance for the occupants of the vehicle when the latter rolls over a roadway, are relevant. In this case, several sources of noise, such as the noise referred to as "indentation noise", due to the impact of the rough patches of the road in the contact area, the noise referred to as "friction noise", essentially generated on exiting the contact area, and the noise referred to as "pattern noise", due to the arrangement of the pattern elements and to the resonance in the various grooves, are distinguished. The range of frequencies concerned typically corresponds here to a range extending from 300 to 3000 Hz approximately.

### [Summary of Invention]

### [Technical Problem]

During their research, the inventors have discovered a specific portion intended in particular for a rubber article, in particular, a tire, a shoe, a conveyor or a caterpillar track, in more particular for a tire, which allows unexpectedly improved sound and vibration barrier properties, and a stability performance.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the

considered rubber composition.

In the present description, unless expressly indicated otherwise, each $Tg_{DSC}$ (glass transition temperature) is measured in a known way by DSC (Differential Scanning Calorimetry) according to Standard ASTM D3418-08.

Any interval of values denoted by the expression "between a and b" represents the range of values of more than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s), the product of the reaction of the various constituents used or both, some of the constituents being able or intended to react together, at least partly, during the various manufacturing phases of the composition, in particular during the vulcanization (curing).

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" means "in the circumferential or axial direction".

The expression "X extending substantially perpendicularly to Y" (or the expression "X substantially perpendicular to Y") means the angle from the extending direction of X (or X) to Y is from 80 to 100 degrees, preferably from 85 to 95 degree.

The expression "X extending substantially parallelly to Y" (or the expression "X substantially parallel to Y") means the angle from the extending direction of X to Y is from -10 to 10 degrees, preferably from -5 to 5 degree.

**[Solution to Problem]**

The invention is an article comprising a portion (10) comprising a rubber composition based on at least an elastomer matrix, a reinforcing filler and a plasticizing agent;

> the portion (10) provided with a plurality of holes (11), each extending substantially perpendicularly to a face (12); and the holes (11) distributed at a substantially equal interval (t) over the face (12); wherein a product of the interval (t) and a ratio by weight of the reinforcing filler to the plasticizing agent is more than 2 mm, preferably between 2 and 10 mm.

The holes (11) pass through the portion (10), and the holes (11), especially the cross sections of the holes (11) on the face (12), are substantially uniformly distributed over the face (12).

The face (12) may be a flat face, a curved face or combinations thereof.

The face (12) may be a cross section of the portion (10) or a real surface with which the portion (10) is provided.

The interval (t) may be obtained by averaging each gap between adjacent holes (11) on the face (12).

"Substantially equal interval (t)" should be understood to mean that each gap between adjacent holes (11) on the face (12) may be different from the interval (t) by less than 10%, preferably at most 5%, by length per 100% by length of the interval (t).

**[Advantageous Effects of Invention]**

The specific portion (10) (in particular, a tire tread (2), a shoe sole, a conveyor belt or a caterpillar track tread, in more particular a tire tread (2)) of the article according to the invention allows unexpectedly improved sound and vibration barrier properties, while improving a stability performance.

In some embodiments, a ratio by volume of the holes (11) to the portion (10) other than the holes (11) is more than 40% (for example, between 40 and 400%), preferably more than 50% (for example, between 50 and 350%), more preferably at least 60% (for example, from 60 to 300 %), still more preferably at least 70% (for example, from 70 to 250%).

According to a preferred embodiment, the ratio is obtained by directly measuring the volume ($V_p$) of the whole portion (10) and the volume ($V_h$) of all of the holes (11) and by calculating the measurement results as follows:

$$(V_p-V_h)/V_p.$$

According to another preferred embodiment, the ratio is also obtained by measuring the density ($D_p$) of the portion (10) provided with the holes (11) and the density ($D_{po}$) of the portion (10) other than the holes (11) and by calculating the measurement results as follows:

$$(D_{po}/D_p)-1.$$

Various known methods are applicable for the measurement of the above density. For example, immersion method, liquid pycnometer method and titration method (see, for example ISO-1183, ASTM D792).

In some embodiments, the portion (10) other than the holes (11) may be made of the rubber composition.

In some embodiments, each of the holes (11) has a cross sectional area (s) on the face (12), and wherein a ratio of the cross sectional area (s) to the interval (t) is more than 2.5 mm (for example, between 2.5 and 100 mm), preferably more than 3.0 mm (for example, between 3.0 and 90 mm), more preferably more than 3.5 mm (for example, between 3.5 and 80 mm), still more preferably more than 4.0 mm (for example, between 4.0 and 70 mm), particularly more than 4.5 mm (for example, between 4.5 and 60 mm), more particularly more than 5.0 mm (for example, between 5.0 and 50 mm), still more particularly more than 5.5 mm (for example, between 5.5 and 40 mm).

According to a preferred embodiment, the cross section of each of the holes (11) on the face (12) is polygonal, elliptical or circular.

In some embodiments, the cross sectional area (s) is more than 5 $mm^2$ (for example, between 5 and 90 $mm^2$), preferably more than 6 $mm^2$ (for example, between 6 and 80 $mm^2$), more preferably more than 7 $mm^2$ (for example, between 7 and 70 $mm^2$), still more preferably more than 8 $mm^2$ (for example, between 8 and 60 $mm^2$), particularly more than 9 $mm^2$ (for example, between 9 and 50 $mm^2$).

In some embodiments, the cross section of each of the holes (11) on the face (12) is circular and wherein its diameter (d) is more than 2.5 mm (for example, between 2.5 and 10 mm), preferably more than preferably more than 3 mm (for example, between 3 and 9 mm), still more preferably at least 3.5 mm (for example, from 3.5 to 8 mm).

In some embodiments, the interval (t) is less than 2 mm, preferably between 0.5 and 2.0 mm.

In some embodiments, the portion (10) is an external portion.

In some embodiments, "external" portion is to say by definition, as is known, which is in contact either with the air or with an inflating gas.

In some embodiments, at least one of opposite ends of each of the holes (11) externally opens, preferably opposite ends of each of the holes (11) externally open.

In some embodiments, at least one of opposite ends of each of the holes (11) opens outside, preferably opposite ends of each of the holes (11) open outside.

In some embodiments, the article is intended to come into contact with the ground.

In some embodiments, the face (12) forms an angle other than 0 degree with the surface of the ground.

In some embodiments, the face (12) is substantially perpendicular to the surface of the ground.

In some embodiments, holes (11) are arranged in a plurality, preferably at least 3, of lines on the face (12), and wherein the lines extend substantially parallelly to the surface of the ground.

In some embodiments, the portion (10) is not intended to come into contact with the ground during the service life of the article.

According to a preferred embodiment, the article is a tire (1), and the portion (10) is an under-tread(s) of the tire (1).

In some embodiments, the portion (10) is intended to come into contact with the ground during the service life of the article.

According to a preferred embodiment the article is a tire, and the portion is a tread block(s), a tread rib(s) or the both of the tire.

According to a preferred embodiment, the article is a tire (1), and the portion (10) is a cap-tread(s), a sub-tread(s) or the both of the tire, preferably a sub-tread(s) of the tire (1). The sub-tread(s) is positioned radially inner than

the cap-tread(s) in the tire (1).

In some embodiments, the holes (11) are not intended to arrive at a surface comprised of the portion (10), and the surface intended to come into contact with ground during the service life of the article.

In some embodiments, in case of that the article is a tire (1), the service life means the duration to use the tire (1) (for example, the term from the new state to the final state of the tire (1), the final state means a state on reaching the wear indicator bar(s) in the tread (2) of tire (1)).

In some embodiments, the article is a tire, a shoe, a conveyor or a caterpillar track.

According to a preferred embodiment, the article is a shoe, preferably, the portion (10) is comprised of a shoe sole.

According to a preferred embodiment, the article is a conveyor, preferably, the portion (10) is comprised of a conveyor belt.

According to a preferred embodiment, the article is a caterpillar track, preferably the portion (10) is comprised of a caterpillar track tread.

In some embodiments, the article is a tire (1).

According to a preferred embodiment, the tire is particularly intended to be equipped to passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers)).

According to a preferred embodiment, the portion (10) is a tread (2), a sidewall(s), an inner layer or combinations thereof, preferably a tread (2), a sidewall(s) or combinations thereof.

In some embodiments, the face (12) is substantially perpendicular to an axial direction of a tire (1).

In some embodiments, the face (12) is substantially perpendicular to a circumferential direction of a tire (1).

In some embodiments, the portion (10) is comprised of a tread (2) of a tire (1).

According to a preferred embodiment, the portion (10) is comprised of a cap-tread(s), a sub-tread(s), an under-tread(s) or combinations thereof, of a tread (2) of a tire (1), preferably a sub-tread(s), an under-tread(s) or the both, of a tread (2) of a tire (1).

[Brief Description of Drawings]

Other characteristics and advantages of the invention arise from the description made hereafter in reference to the annexed drawings which show, as nonrestrictive examples, of the embodiments of the object of the invention.

In these drawings:

[Fig. 1]
Fig. 1 shows a schematic view of a cross sectional view of a portion (10) of an article according to the invention.
[Fig. 2]
Fig. 2 shows a schematic view of a cross sectional view of a portion (10) of an article according to the invention.

Each of the appended Fig. 1 and Fig. 2 schematically (in particular not to a specific scale) represents, in the cross section of the portion (10) of the article.

In the Fig. 1, the article is a tire (1) that comprises the portion (10). The portion (10) is an under-tread comprised of a tread (2) of the tire (1), the portion (10) is provided with a plurality of holes (11), each extending substantially perpendicularly to a face (12) substantially perpendicular to the axial direction of the tire (1), and the portion (10) is in contact with the air. The holes (11) are distributed an equal interval (t) over the face (12), opposite ends of each of the holes (11) opens outside, each of the holes (11) has a circular cross section having an area (s) and a diameter (d) on the face (12), and the holes (11) are arranged at the substantially equal interval (t) in a plurality of lines on the face (12). The lines extend substantially parallelly to the circumferential direction (C) of the tire (1), and the lines extend substantially perpendicularly to a radial direction (R) of the tire (1).

In the Fig. 2, the article is a tire (1) that comprises the portion (10). The portion (10) is a a sub-tread comprised of a tread block of the tread (2) of the tire (1), the portion (10) is provided with a plurality of holes (11), each extending substantially perpendicularly to a face (12) substantially perpendicular to the circumferential direction of the tire (1), and the portion (10) is in contact with the air. The holes (11) are not intended to arrive at a surface comprised of the portion (10), the surface intended to come into contact with the ground during the service life of the article, the holes (11) are distributed an equal interval (t) over the face (12), opposite ends of each of the holes (11) opens outside, each of the holes (11) has a circular cross section having an area (s) and a diameter (d) on the face (12), and the holes (11) are arranged at the substantially equal interval (t) in a plurality of lines on the face (12). The lines extend substantially perpendicularly to the circumferential direction (C) of the tire (1), and the lines extend substantially perpendicularly to a radial direction (R) of the tire (1).

Each of the Fig.1 and Fig.2 shows, on the face (12), a cross section of the portion (10) which forms a cuboid having a length (L: 100 mm), a width (W: 100 mm), and a thickness (T: 20 mm).

The portion (10) of the article according to the invention comprises a rubber composition based on an elastomer matrix.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/$\alpha$ -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of rubbers will understand that the invention is preferably employed with essentially unsaturated diene elastomers.

Given these definitions, the expression diene elastomer capable of being used in the compositions in accordance with the invention is understood in particular to mean:

(a) - any homopolymer obtained by polymerization of a conjugated diene monomer, preferably having from 4 to 12 carbon atoms;

(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the "vinyltoluene" commercial mixture, para-(tert-butyl) styrene, methoxystyrenes, chlorostyrenes, vinylmesitylene, divinylbenzene or vinylnaphthalene.

In some embodiments, the elastomer matrix comprises at least one diene elastomer selected from the group consisting of natural rubber (NR), synthetic polyisoprenes (IR), polybutadienes (BR), butadiene copolymers, isoprene copolymers and combinations thereof; such copolymers are preferably selected from the group consisting of butadiene copolymers combinations thereof, more preferably selected from the group consisting of styrene-butadiene copolymers (SBR), butadiene-isoprene copolymers (BIR), styrene-isoprene copolymers (SIR), styrene-butadiene-isoprene copolymers (SBIR) and combinations thereof, still more preferably selected from the group consisting of styrene-butadiene copolymers (SBR) and combinations thereof.

The diene elastomer may have any microstructure which depends on the polymerization conditions used, in particular on the presence or absence of a modifying agent, randomizing agent, or both and on the amounts of modifying agent, randomizing agent, or both employed. This elastomer may, for example, be a block, statistical, sequential or micro sequential elastomer and may be prepared in dispersion or in solution. This elastomer may be coupled, star-branched, or both; or else functionalized with a coupling, star-branching, or both; or functionalizing agent.

According to preferred embodiment, the elastomer matrix comprises more than 50 phr (for example, more than 50 phr and up to 100 phr) of a first diene elastomer which is a styrene-butadiene copolymer, advantageously a solution styrene-butadiene copolymer, and optionally comprising less than 50 phr (for example, 0 phr to less than 50 phr) of a second diene elastomer which is different from the first diene elastomer.

According to a more preferred embodiment, the styrene-butadiene copolymer exhibits a styrene unit of less than 30% by weight (for example, between 3 and 30% by weight) per 100% by weight of the styrene-butadiene copolymer, preferably less than 27% by weight (for example, between 5 and 27% by weight), more preferably less than 23% by weight (for example, between 7 and 23% by weight), still more preferably less than 20% by weight (for example, between 10 and 20% by weight), particularly at most 18% by weight (for example, from 12 to 18%). The styrene unit can be determined by 1H NMR method in accordance with ISO 21561.

According to a more preferred embodiment, the styrene-butadiene copolymer exhibits a glass transition temperature of less than -40°C (for example, between -40°C and -110°C), preferably less than -45°C (for example, between -45°C and -105°C), more preferably less than -50°C (for example, between -50°C and -100°C), still more preferably less than -55°C (for example, between -55°C and -95°C), particularly at most -60°C (for example, -60°C to -90°C).

The portion (10) of the article according to the invention comprises a rubber composition based on a reinforcing

filler.

In some embodiments, the amount of reinforcing filler is more than 90 phr (for example, between 90 and 200 phr), preferably more than 95 phr (for example, between 95 and 195 phr), more preferably more than 100 phr (for example, between 100 and 190 phr), still more preferably more than 105 phr (for example, between 105 and 185 phr), particularly more than 110 phr (for example, between 110 and 180 phr).

In some embodiments, the reinforcing filler comprises a reinforcing organic filler (for example, carbon black), a reinforcing inorganic filler (for instance, silica) or combinations thereof.

Use may be made of any type of reinforcing filler known for its capabilities of reinforcing a rubber composition which can be used for the manufacture of tires, for example a reinforcing organic filler, such as carbon black, or a reinforcing inorganic filler, such as silica, with which a coupling agent is combined in a known way.

As carbon blacks, all carbon blacks conventionally used in tires ("tire-grade" blacks) are suitable, such as for example reinforcing carbon blacks of the 100, 200 or 300 series in ASTM grades (such as for example, the N115, N134, N234, N326, N330, N339, N347 or N375 blacks), or carbon blacks higher series, the 500, 600, 700 or 800 series in ASTM grades (such as for example the N550, N660, N683, N772, N774 blacks). The carbon blacks might for example be already incorporated in an elastomer matrix, for instance, a diene elastomer, in the form of a masterbatch (see for example applications WO 97/36724 or WO 99/16600).

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, granules, beads or any other suitable densified form. Of course, the reinforcing inorganic filler of the mixtures of various reinforcing inorganic fillers, preferably of highly dispersible siliceous filler(s), aluminous filler(s), or both is described hereafter.

Mineral fillers of the siliceous type (preferably silica ($SiO_2$)), the aluminous type (preferably alumina ($Al_2O_3$)), or combinations thereof are suitable in particular as the reinforcing inorganic fillers.

In some embodiments, the reinforcing filler predominately comprises a reinforcing inorganic filler, that is, the reinforcing filler comprises more than 50% by weight of the reinforcing inorganic filler per 100% of the reinforcing filler, preferably the reinforcing filler comprises more than 60%, more preferably more than 70%, still more preferably more than 80%, particularly more than 90%, by weight of the reinforcing inorganic filler per 100% of the reinforcing filler.

In some embodiments, the reinforcing inorganic filler predominately comprises silica, that is, the reinforcing inorganic filler comprises more than 50% by weight of silica per 100% of the reinforcing inorganic filler, preferably the reinforcing inorganic filler comprises more than 60%, more preferably more than 70%, still more preferably more than 80%, particularly more than 90%, more particularly 100%, by weight of silica per 100% of the reinforcing inorganic filler.

The silica may be a type of silica or a blend of several silicas. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$, more preferably 50 to 350 $m^2/g$, still more preferably 100 to 300 $m^2/g$, particularly between 150 and 250 $m^2/g$, wherein the BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B). Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

In some embodiments, the reinforcing filler comprises less than 20 phr (preferably between 0 and 20 phr), preferably less than 15 phr (for example, between 1 and 15 phr), more preferably less than 10 phr (for example, between 2 and 10 phr), of carbon black.

Within each of the aforementioned ranges of content of carbon black in the rubber composition, there is a benefit of coloring properties (black pigmentation agent) and anti-UV properties of carbon blacks, without furthermore adversely affecting the typical performance provided by the reinforcing inorganic filler, namely high grip on wet ground, low hysteresis loss or both.

Use can be made in particular of silane polysulfides, referred to as "symmetrical" or "asymmetrical" depending on their particular structure, as described, for example, in applications WO 03/002648, WO 03/002649 and WO 2004/033548.

Particularly suitable silane polysulfides correspond to the following general formula (I): (I) Z - A - Sx - A - Z, in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem. 1]

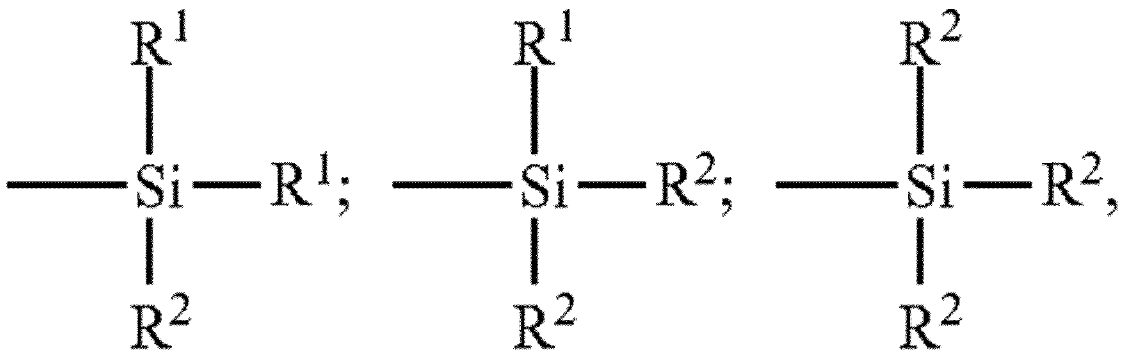

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl, ethyl or both),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are suitable in particular, without limitation of the above definition.

In the case of a mixture of alkoxysilane polysulfides corresponding to the above formula (I), in particular normal commercially available mixtures, the mean value of the "x" indices is a fractional number preferably of between 2 and 5, more preferably of approximately 4. However, the invention can also advantageously be carried out, for example, with alkoxysilane disulfides (x = 2).

Mention will more particularly be made, as examples of silane polysulfides, of bis(($C_1$-$C_4$)alkoxyl($C_1$-$C_4$)alkylsilyl($C_1$-$C_4$)alkyl)polysulfides (in particular disulfides, trisulfides or tetrasulfides), such as, for example, bis(3-trimethoxysilylpropyl) or bis(3-triethoxysilylpropyl)polysulfides. Use is in particular made, among these compounds, of bis(3-triethoxysilylpropyl)tetrasulfide, abbreviated to TESPT, of formula $[(C_2H_5O)_3Si(CH_2)_3S_2]_2$, or bis(3-triethoxysilylpropyl)disulfide, abbreviated to TESPD, of formula $[(C_2HSO)_3Si(CH_2)_3S]_2$. Mention will also be made, as preferred examples, of bis(mono($C_1$-$C_4$)alkoxyldi($C_1$-$C_4$)alkylsilylpropyl)polysulfides (in particular disulfides, trisulfides or tetrasulfides), more particularly bis(monoethoxydimethylsilylpropyl)tetrasulfide, as described in patent application WO 02/083782 (or US 7 217 751).

Mention will in particular be made, as coupling agent other than alkoxysilane polysulfide, of bifunctional POSs (polyorganosiloxanes) or of hydroxysilane polysulfides ($R^2$ = OH in the above formula (I)), such as described in patent applications WO 02/30939 (or US 6 774 255) and WO 02/31041 (or US 2004/051210), or of silanes or POSs carrying

azodicarbonyl functional groups, such as described, for example, in patent applications WO 2006/125532, WO 2006/125533 and WO 2006/125534.

As examples of other silane sulfides, mention will be made, for example, of the silanes bearing at least one thiol (-SH) function (referred to as mercaptosilanes), at least one blocked thiol function or both, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

The content of coupling agent may be from 0.5 to 15% by weight per 100% by weight of the reinforcing inorganic filler, preferably silica.

The amount of coupling agent may be less than 30 phr (for example, between 0.1 and 30 phr), preferably less than 25 phr (for example, between 0.5 and 25 phr), more preferably less than 20 phr (for example, between 1 and 20 phr).

The portion (10) of the article according to the invention comprises a rubber composition based on a plasticizing agent.

In some embodiments, the amount of plasticizer is more than 25 phr, preferably between 25 and 135 phr, more preferably between 25 and 125 phr, still more preferably between 25 and 115 phr, particularly between 25 and 105 phr, more particularly between 25 and 95 phr, still more particularly between 25 and 85 phr.

In some embodiments, the plasticizing agent comprises a liquid plasticizer(s), a hydrocarbon resin(s) or combinations thereof.

According to a preferred embodiment, the plasticizing agent comprises no liquid plasticizer or less than 40 phr, preferably less than 30 phr, more preferably less than 20 phr, still preferably at most 10 phr, of a liquid plasticizer(s).

According to a preferred embodiment, the plasticizing agent comprises between 10 and 100 phr, preferably between 20 and 90 phr, more preferably between 20 and 80 phr, still more preferably between 20 and 70 phr, of a hydrocarbon resin(s).

In some embodiments, a ratio by weight of the liquid plasticizer to the hydrocarbon resin is less than 0.4 (for example, 0 or less than 0.4), preferably less than 0.3 (for example, between 0 and 0.3).

Any extending oil, whether of aromatic or non-aromatic nature, any liquid plasticizing agent known for its plasticizing properties with regard to elastomer matrix(es) (for instance, diene elastomer), can be used as the liquid plasticizer. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

In some embodiments, the plasticizing agent comprises at least one liquid plasticizer selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulfonate plasticizers and combinations thereof, preferably selected from the group consisting of MES oils, TDAE oils, naphthenic oils, vegetable oils and combinations thereof, more preferably selected from the group consisting of MES oils, vegetable oils and combinations thereof, still more preferably selected from the group consisting of vegetable oils and combinations thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and combinations thereof, particularly sunflower oil(s), more particularly sunflower oil(s) containing over 60%, still more particularly more than 70%, especially more than 80%, more especially more than 90%, still more especially 100%, by weight of oleic acid.

While, in a manner known to a person skilled in the art, the designation "resin" is reserved in the present application, by definition, for a compound which is solid at ambient temperature (20°C under atmosphere pressure), in contrast to a liquid plasticizing compound, such as an oil.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic, aromatic or both monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resin(s) as being "plasticizing" exhibits at least one, more preferably all, of the following characteristics:

- a $Tg_{DSC}$ of more than 20°C(for example, between 20°C and 100°C), preferably more than 30°C (for example, between 30°C and 100°C), more preferably more than 40°C (for example, between 40°C and 100°C), still more

preferably more than 50°C (for example, between 50°C and 100°C);

- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resin(s) is determined by steric exclusion chromatography (SEC): solvent tetrahydrofuran; temperature 35°C; concentration 1 g/l; flow rate 1 ml/min; solution filtered through a filter with a porosity of 0.45 $\mu$m before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

In some embodiments, the plasticizing agent comprises at least one hydrocarbon resin selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and combinations thereof. Use is more preferably made, among the above copolymer resins, of those selected from the group consisting of (D)CPD/ vinylaromatic copolymer resins, (D)CPD/terpene copolymer resins, (D)CPD/Cs fraction copolymer resins, (D)CPD/$C_9$ fraction copolymer resins, terpene/vinylaromatic copolymer resins, terpene/phenol copolymer resins, $C_5$ fraction/vinyl-aromatic copolymer resins, $C_9$ fraction/vinylaromatic copolymer resins, and combinations thereof.

The term "terpene" combines here, in a known way, the $\alpha$-pinene, $\beta$-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, $\alpha$-methylstyrene, ortho-, meta- or para-methyl styrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
- limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified $\alpha$-methylstirene resins. It should be remembered that, in order to characterize these phenol-modified resins, use is made, in a known way, of a number referred to as "hydroxyl number" (measured according to Standard ISO 4326 and expressed in mg KOH/g). $\alpha$-Methylstirene resins, in particular those modified with phenol, are well known to a person skilled in the art and are available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol; PI=1.3; $Tg_{DSC}$=36°C; hydroxyl number=56 mg KOH/g); and "Sylvares 600" (Mn=850 g/mol; PI=1.4; $Tg_{DSC}$=50 °C; hydroxyl number=31 mg KOH/g).

In some embodiments, the ratio by weight of the reinforcing filler to the plasticizing agent is less 6, preferably between 1 and 6.

In some embodiments, the product of the interval (t) and a ratio by weight of the reinforcing filler to the plasticizing agent is between 2 and 10 mm.

The rubber composition of the portion (10) of the article according to the invention may be based on all or a part(s) of the usual additives generally used in the elastomer compositions for articles (for example, tires, shoes, conveyor or caterpillar tracks), such as, for example, protection agents, such as antiozone waxes, chemical antiozonants, antioxidants, tackifying resins, methylene acceptors (for example phenolic novolak resin) or methylene donors (for example

HMT or H3M hexamethylenetetramine (HMT) or hexamethoxymethylmelamine (H3M)), a crosslinking system based either on sulfur, or on donors of sulfur, or peroxide, or bismaleimides or combinations thereof, vulcanization accelerators, or vulcanization activators.

The rubber composition can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

In some embodiments, the rubber composition is based on no blowing agent or based on less than 5 phr, preferably less than 2 phr, more preferably less than 1 phr, still more preferably less than 0.5 phr, particularly less than 0.1 phr, of a blowing agent. The blowing agent is a compound which can decompose thermally and which is intended to release, during thermal activation, for example during the vulcanization of the article (for example a tire), a large amount of gas and to thus result in the formation of bubbles. The blowing agent is preferably selected from a group of compounds consisting of: azo, nitroso, hydrazine, carbazide, semicarbazide, tetrazole, carbonate, citrate, and combinations thereof.

The rubber composition of the portion (10) of the article according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100 °C, finishing phase during which the crosslinking or vulcanization system is incorporated.

A process which can be used for the manufacture of such compositions comprises, for example and preferably, the following steps:

- incorporating in the elastomer matrix, for instance, the diene elastomer(s), in a mixer, the reinforcing filler, the plasticizing agent, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system;
- kneading everything up to a maximum temperature of less than 110°C.

According to a preferred embodiment of the invention, the first (non-productive) phase is carried out in a single thermomechanical stage during which all the necessary constituents may be introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

The crosslinking system is preferably based on sulfur and on a primary vulcanization accelerator, in particular on an accelerator of sulfenamide type. Added to this vulcanization system are various known secondary accelerators or vulcanization activators, such as zinc oxide, stearic acid, guanidine derivatives (in particular diphenylguanidine), and the like, incorporated during the first non-productive phase, during the productive phase or both. The content of sulfur is preferably between 0.5 and 10.0 phr, more preferably between 0.5 and 3.0 phr, and that of the primary accelerator is preferably between 0.5 and 5.0 phr.

Use may be made, as accelerator (primary or secondary) of any compound capable of acting as accelerator of the vulcanization of elastomer matrix, for instance, diene elastomers, in the presence of sulfur, in particular accelerators of the thiazoles type and their derivatives, accelerators of thiurams types, or zinc dithiocarbamates. These accelerators are more preferably selected from the group consisting of 2-mercaptobenzothiazyl disulfide (abbreviated to "MBTS"), N-cyclohexyl-2-benzothiazole sulfenamide (abbreviated to "CBS"), N,N-dicyclohexyl-2 benzothiazolesulfenamide ("DCBS"), N-tert-butyl-2-ben zothiazolesulfenamide ("TBBS"), N-tert-butyl-2 benzothiazolesulfenimide ("TBSI"), zinc dibenzyldithiocarbamate ("ZBEC"), Tetrabenzylthiuram disulfide ("TBZTD") and combinations thereof.

The final composition thus obtained is subsequently calendered, for example in the form of a sheet or of a plaque, in particular for laboratory characterization, or else extruded in the form of a rubber profiled element which can be used directly as a portion (10) of an article, for example, a tire tread (2), a shoe sole, a conveyor belt and a caterpillar track tread.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the rubber composition under consideration.

The holes (11) of the portion (10) of the article according to the invention can be formed using needles or fingers

during the vulcanization. It is possible to produce the article (for instance, a tire) according to invention industrially for example using methods described in EP 0 925 007.

The invention relates to the rubber compositions and the above articles, both in the mixed state (after mixing and before curing) and in the cured state (i.e., after crosslinking or vulcanization), unless expressly stated otherwise.

Each of the above aspects including each of the preferred range(s), matter(s) or combinations thereof may be applied to any one of the other aspects or the embodiments of the invention.

The invention is further illustrated by the following non-limiting examples.

[Example]

In the test, thirty test specimens (identified as T-1 (a reference), T-3 to T-6, T-8 to T-10, and T-13 to T-30 (examples according to invention), T-2, T-7, T-11 and T-12 (comparative examples)) comprising rubber compositions are compared. Each of the specimens (T-3 to T-6, T-8 to T-10, and T-13 to T-30 (examples according to invention)) can be a portion (10) of an article according to the invention. The rubber compositions are based on a diene elastomer (SBR) reinforced with a blend of silica (as a reinforcing inorganic filler) and carbon black, and a plasticizing agent comprising a liquid plasticizer and a hydrocarbon resin. The formulations of the rubber compositions, with the content of the various products expressed in phr, information about holes (11), values obtained therefrom, and their properties in the cured state are given at Tables 1 to 5.

Each rubber composition, except T-1, was produced as follows: The reinforcing filler, the plasticizing agent, the elastomer matrix and the various other ingredients, with the exception of sulfur and a sulfenamide type vulcanization accelerator (as a vulcanization accelerator) in the crosslinking system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulfur and the sulfenamide type vulcanization accelerator were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 5 mm) or of fine sheets of rubber, for the measurement of their physical or mechanical properties, or in the form of profiled elements which could be used directly, after cutting, assembling or both to the desired dimensions, for example as tire semi-finished products, in particular as tire treads (2).

After molding into the form of sheets made of each of these rubber compositions and before the following test measurements, the sheets were stacked with arranging metal cylinders in parallel to each other at each equal interval over each of the sheets to form a laminate, the laminate was placed in a press with heated platens at a temperature (typically 150 °C), for the time that was necessary for the crosslinking of each of these rubber compositions (typically several tens of minutes), at a pressure (typically 16 bar). Subsequently, the metal cylinders were extracted from the laminate to obtain each of the specimens (T-2 to T-6) as the cuboid described in the Fig. 1 or Fig. 2. Each of the other specimens (T-7 to T-30) except T-1 was produced with the above process, and forms a cuboid having same length, width and thickness as that of T-2 to T-6 although the numbers and the thickness of sheets, the number and the size of metal cylinders and the interval (t) of T-7 to T-30 are different from that of T-2 to T-6.

Except the reference, each of ratio by volume of the holes (11) to each of the specimens other than the holes (11) was obtained by directly measuring the volume of each of the specimens and the volume of all of the holes (11) and by calculating the measurement results.

The reference (T-1) was produced in accordance with methods described in WO2012164002, therefore the reference (T-1) is made of a foam rubber composition that is a rubber composition based on air bubbles forming holes. The reference (T-1) forms a cuboid having same length, width and thickness as that of the others.

The ratio by volume of the foams to the reference (T-1) other than the foam was obtained by measuring the density of the reference provided with the foams and the density of the portion (10) other than the foam in accordance with an immersion method mentioned in ISO-1183, and by calculating the measurement results.

Each of the test specimens was placed between two metallic platens in an INSTRON testing machine of type 5969, and was compressed in a direction of the thickness of each of the test specimens, at a rate of 2 mm/min, with 3 times or more. As the following step, each of the test specimens was compressed from 0 to 40 % of the compressive strain (= compressive deflection / initial thickness of the test specimens) at a rate of 2 mm/min, and then was released from 40 to 0% of the compressive strain at a rate of 2 min/min, and the INSTRON machine was used to record each compressive force versus compressive deflection as first results.

The fist results and the initial sizes of the specimens were used to calculate each compressive stress (= compressive force / area of the test specimens = compressive force / initial thickness of the test specimens / width of the test specimens) versus compressive strain (= compressive deflection / initial thickness of the test specimens) as

second results.

The second results were used to differentiate each compressive stress along compressive strain in order to obtain each compressive modulus versus compressive strain as third results.

The second and the third results were used to compute each criterion value (initial tangent modulus, plateau region, and plateau stress) for each of the test specimens.

The initial tangent modulus is a compressive modulus (MPa), wherein the compressive strain was in the vicinity of 0 %. The initial tangent modulus is representative of stability performance of the article, therefore an initial tangent modulus greater than that of the reference indicates improved performances.

The plateau region is a range (%) of compressive strains where compressive moduluses were equal to or less than the half of the initial tangent modulus. The plateau region is representative of sound and vibration barriers of the article, therefore a plateau region longer than that of the reference indicates improved properties. Preferably, the plateau region is longer than 10%.

The plateau stress is a compressive stress (unit: bar) at a compressive strain where a compressive modulus was firstly made equal to a half of the initial tangent modulus. Preferably, the plateau stress is between 0.5 and 10 bar.

The results from Tables 1 to 5 demonstrate that the test specimens according to the invention have unexpectedly improved sound and vibration barrier properties, while improving the stability performance than that of the reference.

In conclusion, the specific portion (10) of the article according to the invention allows unexpectedly improved sound and vibration barrier properties while improving a stability performance.

[Table 1]

| | T-1 | T-2 | T-3 | T-4 | T-5 | T-6 |
|---|---|---|---|---|---|---|
| SBR (21) [phr] | 100 | 100 | 100 | 100 | 100 | 100 |
| Carbon black (22) [phr] | 4 | 4 | 4 | 4 | 4 | 4 |
| Silica (23) [phr] | 80 | 80 | 110 | 170 | 110 | 170 |
| Coupling agent (24) [phr] | 8 | 8 | 11 | 17 | 11 | 17 |
| Liquid plasticizer (25) [phr] | 3 | 40 | 10 | 10 | 5 | 5 |
| Hydrocarbon resin (26) [phr] | 10 | 100 | 65 | 65 | 25 | 25 |
| Antioxidant (27) [phr] | 4.4 | 4.4 | 4.4 | 4.4 | 4.4 | 4.4 |
| Azodicarbonamide (28) [phr] | 8.6 | | | | | |
| Urea (29) [phr] | 9.2 | | | | | |
| Antiozone wax [phr] | 1.9 | 2.6 | 2.6 | 2.6 | 2.6 | 2.6 |
| DPG (30) [phr] | 1.6 | 2.4 | 2.4 | 2.4 | 2.4 | 2.4 |
| Stearic acid [phr] | 2 | 3 | 3 | 3 | 3 | 3 |
| Zinc oxide [phr] | 1 | 0.9 | 0.9 | 0.9 | 0.9 | 0.9 |
| Sulphur [phr] | 1 | 0.9 | 0.9 | 0.9 | 0.9 | 0.9 |
| CBS (31) [phr] | 1.9 | 2.3 | 2.3 | 2.3 | 2.3 | 2.3 |
| t: Interval of each of the holes (11) on the face (12) [mm] | 1.7 | 1.7 | 1.7 | 1.7 | 1.7 | 1.7 |
| s: Cross sectional area of each of the holes (11) on the face (12) [$mm^2$] | 19.6 | 19.6 | 19.6 | 19.6 | 19.6 | 19.6 |
| d: Diameter of circular cross section of the holes (11) on the face (12) [mm] | 5 | 5 | 5 | 5 | 5 | 5 |
| Number of the holes (11) | 42 | 42 | 42 | 42 | 42 | 42 |
| Production of the interval (t) and the ratio by weight of reinforcing filler (carbon black and silica) to plasticizing agent (liquid plasticizer and hydrocarbon resin) [mm] | - | 1.02 | 2.58 | 3.94 | 6.46 | 9.86 |
| Ratio by volume of the holes (11) to the portion (10) other than the holes (11) [%] | 70 | 70 | 70 | 70 | 70 | 70 |
| Ratio of the cross section (s) to the interval (t) [mm] | - | 11.5 | 11.5 | 11.5 | 11.5 | 11.5 |
| Ratio by weight of the liquid plasticizer to the hydrocarbon resin | 0.30 | 0.40 | 0.15 | 0.15 | 0.15 | 0.15 |
| Initial tangent modulus [MPa] | 0.97 | 0.39 | 1.38 | 4.67 | 3.68 | 8.05 |
| Plateau region [%] | 0 | 14 | 16 | 19 | 16 | 16 |

(continued)

| | T-1 | T-2 | T-3 | T-4 | T-5 | T-6 |
|---|---|---|---|---|---|---|
| Plateau stress [bar] | - | 0.4 | 0.7 | 1.4 | 2.1 | 4.8 |

(21) SBR: Solution SBR with 16% of styrene unit ($Tg_{DSC}$ = -65°C);
(22) Carbon black: Carbon black (ASTM grade N234 from Cabot);
(23) Silica: Silica ("Zeosil 1165MP" from Rhodia (CTAB, BET: 160 $m^2/g$));
(24) Coupling agent TESPT ("Si69" from Evonik);
(25) Oleic sunflower oil ("Agripure 80" from Cargill, Weight percent oleic acid: 100%);
(26) Cycloaliphatic hydrocarbon resins ( "ESCOREZ5600" from ExxonMobil, $Tg_{DSC}$=52°C);
(27) Azodicarbonamide (Cellmic C-22 from Sankyo Kasei);
(28) Urea (Mitsui Chemical);
(29) Mixture of N-(1,3-dimethylbutyl)-N-phenyl-para-phenylenediamine ("Santoflex 6-PPD" from Flexsys) and 2,2,4-trimethyl-1,2-dihydroquinolone ("TMQ" from Lanxess);
(30) Diphenylguanidine ("Perkacit DPG" from Flexsys);
(31) N-dicyclohexyl-2-benzothiazolesulfenamide ("Santocure CBS" from Flexsys);

[Table 2]

| | T-7 | T-8 | T-9 | T-10 | T-11 | T-12 |
|---|---|---|---|---|---|---|
| SBR (21) [phr] | 100 | 100 | 100 | 100 | 100 | 100 |
| Carbon black (22) [phr] | 4 | 4 | 4 | 4 | 4 | 4 |
| Silica (23) [phr] | 110 | 110 | 110 | 110 | 110 | 110 |
| Coupling agent (24) [phr] | 11 | 11 | 11 | 11 | 11 | 11 |
| Liquid plasticizer (25) [phr] | 10 | 10 | 10 | 10 | 10 | 10 |
| Hydrocarbon resin (26) [phr] | 65 | 65 | 65 | 65 | 65 | 65 |
| Antioxidant (27) [phr] | 4.4 | 4.4 | 4.4 | 4.4 | 4.4 | 4.4 |
| Antiozone wax [phr] | 2.6 | 2.6 | 2.6 | 2.6 | 2.6 | 2.6 |
| DPG (30) [phr] | 2.4 | 2.4 | 2.4 | 2.4 | 2.4 | 2.4 |
| Stearic acid [phr] | 3 | 3 | 3 | 3 | 3 | 3 |
| Zinc oxide [phr] | 0.9 | 0.9 | 0.9 | 0.9 | 0.9 | 0.9 |
| Sulphur [phr] | 0.9 | 0.9 | 0.9 | 0.9 | 0.9 | 0.9 |
| CBS (31) [phr] | 2.3 | 2.3 | 2.3 | 2.3 | 2.3 | 2.3 |
| t: Interval of each of the holes (11) on the face (12) [mm] | 0.96 | 2.0 | 1.5 | 1.9 | 1.0 | 1.0 |
| s: Cross sectional area of each of the holes (11) on the face (12) [$mm^2$] | 9.6 | 4.9 | 22.1 | 9.6 | 18.1 | 39.6 |
| d: Diameter of circular cross section of the holes (11) on the face (12) [mm] | 3.5 | 2.5 | 5.3 | 3.5 | 4.8 | 7.1 |
| Number of the holes (11) | 117 | 112 | 51 | 78 | 70 | 36 |
| Production of the interval (t) and the ratio by weight of reinforcing filler (carbon black and silica) to plasticizing agent (liquid plasticizer and hydrocarbon resin) [mm] | 1.46 | 3.04 | 2.28 | 2.89 | 1.52 | 1.52 |
| Ratio by volume of the holes (11) to the portion (10) other than the holes (11) [%] | 129 | 38 | 129 | 60 | 173 | 248 |
| Ratio of the cross section (s) to the interval (t) [mm] | 10.02 | 2.45 | 14.71 | 5.06 | 18.10 | 39.59 |
| Ratio by weight of the liquid plasticizer to the hydrocarbon resin | 0.15 | 0.15 | 0.15 | 0.15 | 0.15 | 0.15 |
| Initial tangent modulus [MPa] | 0.75 | 2.65 | 1.30 | 2.15 | 0.55 | 0.42 |
| Plateau region [%] | 23 | 5 | 15 | 15 | 17 | 30 |
| Plateau stress [bar] | 1.1 | 6.6 | 1.2 | 3.5 | 0.6 | 0.3 |

[Table 3]

| | T-13 | T-14 | T-15 | T-16 | T-17 | T-18 |
|---|---|---|---|---|---|---|
| SBR (21) [phr] | 100 | 100 | 100 | 100 | 100 | 100 |
| Carbon black (22) [phr] | 4 | 4 | 4 | 4 | 4 | 4 |
| Silica (23) [phr] | 170 | 170 | 170 | 170 | 170 | 170 |
| Coupling agent (24) [phr] | 17 | 17 | 17 | 17 | 17 | 17 |
| Liquid plasticizer (25) [phr] | 10 | 10 | 10 | 10 | 10 | 10 |
| Hydrocarbon resin (26) [phr] | 65 | 65 | 65 | 65 | 65 | 65 |
| Antioxidant (27) [phr] | 4.4 | 4.4 | 4.4 | 4.4 | 4.4 | 4.4 |
| Antiozone wax [phr] | 2.6 | 2.6 | 2.6 | 2.6 | 2.6 | 2.6 |
| DPG (30) [phr] | 2.4 | 2.4 | 2.4 | 2.4 | 2.4 | 2.4 |
| Stearic acid [phr] | 3 | 3 | 3 | 3 | 3 | 3 |
| Zinc oxide [phr] | 0.9 | 0.9 | 0.9 | 0.9 | 0.9 | 0.9 |
| Sulphur [phr] | 0.9 | 0.9 | 0.9 | 0.9 | 0.9 | 0.9 |
| CBS (31) [phr] | 2.3 | 2.3 | 2.3 | 2.3 | 2.3 | 2.3 |
| t: Interval of each of the holes (11) on the face (12) [mm] | 0.96 | 2.0 | 1.5 | 1.9 | 1.0 | 1.0 |
| s: Cross sectional area of each of the holes (11) on the face (12) [$mm^2$] | 9.6 | 4.9 | 22.1 | 9.6 | 18.1 | 39.6 |
| d: Diameter of circular cross section of the holes (11) on the face (12) [mm] | 3.5 | 2.5 | 5.3 | 3.5 | 4.8 | 7.1 |
| Number of the holes (11) | 117 | 112 | 51 | 78 | 70 | 36 |
| Production of the interval (t) and the ratio by weight of reinforcing filler (carbon black and silica) to plasticizing agent (liquid plasticizer and hydrocarbon resin) [mm] | 2.92 | 4.64 | 3.48 | 4.41 | 2.32 | 2.32 |
| Ratio by volume of the holes (11) to the portion (10) other than the holes (11) [%] | 129 | 38 | 129 | 60 | 173 | 248 |
| Ratio of the cross section (s) to the interval (t) [mm] | 10.02 | 2.45 | 14.71 | 5.06 | 18.10 | 39.59 |
| Ratio by weight of the liquid plasticizer to the hydrocarbon resin | 0.15 | 0.15 | 0.15 | 0.15 | 0.15 | 0.15 |
| Initial tangent modulus [MPa] | 2.68 | 6.10 | 3.81 | 5.72 | 2.62 | 2.24 |
| Plateau region [%] | 23 | 3 | 17 | 14 | 17 | 32 |
| Plateau stress [bar] | 2.2 | 13.3 | 2.2 | 6.7 | 1.3 | 0.6 |

[Table 4]

| | T-19 | T-20 | T-21 | T-22 | T-23 | T-24 |
|---|---|---|---|---|---|---|
| SBR (21) [phr] | 100 | 100 | 100 | 100 | 100 | 100 |
| Carbon black (22) [phr] | 4 | 4 | 4 | 4 | 4 | 4 |
| Silica (23) [phr] | 110 | 110 | 110 | 110 | 110 | 110 |
| Coupling agent (24) [phr] | 11 | 11 | 11 | 11 | 11 | 11 |
| Liquid plasticizer (25) [phr] | 5 | 5 | 5 | 5 | 5 | 5 |
| Hydrocarbon resin (26) [phr] | 25 | 25 | 25 | 25 | 25 | 25 |
| Antioxidant (27) [phr] | 4.4 | 4.4 | 4.4 | 4.4 | 4.4 | 4.4 |
| Antiozone wax [phr] | 2.6 | 2.6 | 2.6 | 2.6 | 2.6 | 2.6 |
| DPG (30) [phr] | 2.4 | 2.4 | 2.4 | 2.4 | 2.4 | 2.4 |
| Stearic acid [phr] | 3 | 3 | 3 | 3 | 3 | 3 |
| Zinc oxide [phr] | 0.9 | 0.9 | 0.9 | 0.9 | 0.9 | 0.9 |
| Sulphur [phr] | 0.9 | 0.9 | 0.9 | 0.9 | 0.9 | 0.9 |
| CBS (31) [phr] | 2.3 | 2.3 | 2.3 | 2.3 | 2.3 | 2.3 |
| t: Interval of each of the holes (11) on the face (12) [mm] | 0.96 | 2.0 | 1.5 | 1.9 | 1.0 | 1.0 |

(continued)

| | T-19 | T-20 | T-21 | T-22 | T-23 | T-24 |
|---|---|---|---|---|---|---|
| s: Cross sectional area of each of the holes (11) on the face (12) [$mm^2$] | 9.6 | 4.9 | 22.1 | 9.6 | 18.1 | 39.6 |
| d: Diameter of circular cross section of the holes (11) on the face (12) [mm] | 3.5 | 2.5 | 5.3 | 3.5 | 4.8 | 7.1 |
| Number of the holes (11) | 117 | 112 | 51 | 78 | 70 | 36 |
| Production of the interval (t) and the ratio by weight of reinforcing filler (carbon black and silica) to plasticizing agent (liquid plasticizer and hydrocarbon resin) [mm] | 3.65 | 7.60 | 5.70 | 7.22 | 3.80 | 3.92 |
| Ratio by volume of the holes (11) to the portion (10) other than the holes (11) [%] | 129 | 38 | 129 | 60 | 173 | 248 |
| Ratio of the cross section (s) to the interval (t) [mm] | 10.02 | 2.45 | 14.71 | 5.06 | 18.10 | 39.59 |
| Ratio by weight of the liquid plasticizer to the hydrocarbon resin | 0.20 | 0.20 | 0.20 | 0.20 | 0.20 | 0.20 |
| Initial tangent modulus [MPa] | 3.00 | 7.10 | 3.40 | 4.70 | 2.20 | 1.80 |
| Plateau region [%] | 24 | 4 | 17 | 12 | 16 | 32 |
| Plateau stress [bar] | 2.2 | 14.1 | 2.3 | 7.3 | 1.3 | 0.6 |

[Table 5]

| | T-25 | T-26 | T-27 | T-28 | T-29 | T-30 |
|---|---|---|---|---|---|---|
| SBR (21) [phr] | 100 | 100 | 100 | 100 | 100 | 100 |
| Carbon black (22) [phr] | 4 | 4 | 4 | 4 | 4 | 4 |
| Silica (23) [phr] | 170 | 170 | 170 | 170 | 170 | 170 |
| Coupling agent (24) [phr] | 17 | 17 | 17 | 17 | 17 | 17 |
| Liquid plasticizer (25) [phr] | 5 | 5 | 5 | 5 | 5 | 5 |
| Hydrocarbon resin (26) [phr] | 25 | 25 | 25 | 25 | 25 | 25 |
| Antioxidant (27) [phr] | 4.4 | 4.4 | 4.4 | 4.4 | 4.4 | 4.4 |
| Antiozone wax [phr] | 2.6 | 2.6 | 2.6 | 2.6 | 2.6 | 2.6 |
| DPG (30) [phr] | 2.4 | 2.4 | 2.4 | 2.4 | 2.4 | 2.4 |
| Stearic acid [phr] | 3 | 3 | 3 | 3 | 3 | 3 |
| Zinc oxide [phr] | 0.9 | 0.9 | 0.9 | 0.9 | 0.9 | 0.9 |
| Sulphur [phr] | 0.9 | 0.9 | 0.9 | 0.9 | 0.9 | 0.9 |
| CBS (31) [phr] | 2.3 | 2.3 | 2.3 | 2.3 | 2.3 | 2.3 |
| t: Interval of each of the holes (11) on the face (12) [mm] | 0.96 | 2.0 | 1.5 | 1.9 | 1.0 | 1.0 |
| s: Cross sectional area of each of the holes (11) on the face (12) [$mm^2$] | 9.6 | 4.9 | 22.1 | 9.6 | 18.1 | 39.6 |
| d: Diameter of circular cross section of the holes (11) on the face (12) [mm] | 3.5 | 2.5 | 5.3 | 3.5 | 4.8 | 7.1 |
| Number of the holes (11) | 117 | 112 | 51 | 78 | 70 | 36 |
| Production of the interval (t) and the ratio by weight of reinforcing filler (carbon black and silica) to plasticizing agent (liquid plasticizer and hydrocarbon resin) [mm] | 5.57 | 11.60 | 8.70 | 11.02 | 5.80 | 5.80 |
| Ratio by volume of the holes (11) to the portion (10) other than the holes (11) [%] | 129 | 38 | 129 | 60 | 173 | 248 |
| Ratio of the cross section (s) to the interval (t) [mm] | 10.02 | 2.45 | 14.71 | 5.06 | 18.10 | 39.59 |
| Ratio by weight of the liquid plasticizer to the hydrocarbon resin | 0.20 | 0.20 | 0.20 | 0.20 | 0.20 | 0.20 |
| Initial tangent modulus [MPa] | 6.50 | 14.20 | 7.90 | 15.80 | 6.20 | 5.00 |
| Plateau region [%] | 33 | 4 | 17 | 11 | 16 | 29 |

(continued)

| | T-25 | T-26 | T-27 | T-28 | T-29 | T-30 |
|---|---|---|---|---|---|---|
| Plateau stress [bar] | 4.3 | 28.3 | 4.2 | 14.9 | 2.5 | 1.2 |

## Claims

1. An article, in particular a tire, comprising a portion (10) such as the tread, comprising a rubber composition based on at least an elastomer matrix, a reinforcing filler and a plasticizing agent;

   **characterized in that** the portion (10) is provided with a plurality of holes (11), each extending substantially perpendicular to a face (12); and
   the holes (11) distributed at a substantially equal interval (t) over the face (12);
   wherein a product of the interval (t) and a ratio by weight of the reinforcing filler to the plasticizing agent is more than 2 mm.

2. The article according to Claim 1, wherein a ratio by volume of the holes (11) to the portion (10) other than the holes (11) is more than 40%.

3. The article according to Claim 1 or Claim 2, wherein each of the holes (11) has a cross sectional area (s) on the face (12), and wherein a ratio of the cross sectional area (s) to the interval (t) is more than 2.5 mm.

4. The article according to Claim 3, wherein the cross sectional area (s) is more than 5 $mm^2$.

5. The article according to Claim 3 or Claim 4, wherein the cross section of each of the holes (11) on the face (12) is circular and wherein its diameter (d) is more than 2.5 mm.

6. The article according to any one of Claims 1 to 5, wherein the interval (t) is less than 2 mm.

7. The article according to any one of Claims 1 to 6, wherein the portion (10) is an external portion, preferably wherein at least one of opposite ends of each of the holes (11) externally opens, more preferably wherein at least one of opposite ends of each of the holes (11) opens outside.

8. The article according to any one of Claims 1 to 7, wherein the article is intended to come into contact with the ground, preferably wherein the face (12) forms an angle other than 0 degree with the surface of the ground, more preferably wherein the face (12) is substantially perpendicular to the surface of the ground, still more preferably wherein holes (11) are arranged in a plurality of lines on the face (12), and wherein the lines extend substantially parallelly to the surface of the ground.

9. The article according to any one of Claims 1 to 8, wherein the article is a tire, a shoe, a conveyor or a caterpillar track, preferably wherein the article is a tire (1), more preferably wherein the portion (10) is comprised of a tread (2) of a tire (1).

10. The article according to any one of Claim 1 to 9, wherein the elastomer matrix comprises at least one diene elastomer selected from the group consisting of natural rubber, synthetic polyisoprenes, polybutadienes, butadiene copolymers, isoprene copolymers and combinations thereof.

11. The article according to any one of Claims 1 to 10, wherein the amount of reinforcing filler is more than 90 phr.

12. The article according to any one of Claims 1 to 11, wherein the amount of plasticizer is more than 25 phr.

13. The article according to any one of Claims 1 to 12, wherein the ratio by weight of the reinforcing filler to the plasticizing agent is less 6.

14. The article according to any one of Claims 1 to 13, wherein the product of the interval (t) and a ratio by weight of the reinforcing filler to the plasticizing agent is between 2 and 10 mm.

15. The article according to any one of Claims 1 to 14, wherein the rubber composition is based on no blowing agent or based on less than 5 phr, preferably less than 2 phr, more preferably less than 1 phr, still more preferably less than 0.5 phr, particularly less than 0.1 phr, of a blowing agent.

**Patentansprüche**

1. Artikel, insbesondere ein Reifen, umfassend einen Anteil (10), wie die Lauffläche, umfassend eine Kautschukzusammensetzung, die auf mindestens einer Elastomermatrix, einem Verstärkungsfüllstoff und einem Plastifiziermittel basiert; **dadurch gekennzeichnet, dass** der Anteil (10) mit einer Vielzahl von Löchern (11) ausgestattet ist, von denen sich jedes senkrecht zu einer Fläche (12) erstreckt; und die Löcher (11) in einem im Wesentlichen gleichen Intervall (t) über die Fläche (12) verteilt sind; wobei ein Produkt aus dem Intervall (t) und einem Gewichtsverhältnis des Verstärkungsfüllstoffs zu dem Plastifiziermittel mehr als 2 mm beträgt.

2. Artikel nach Anspruch 1, wobei ein Volumenverhältnis der Löcher (11) zu dem von den Löchern (11) verschiedenen Anteil (10) mehr als 40 % beträgt.

3. Artikel nach Anspruch 1 oder Anspruch 2, wobei jedes der Löcher (11) eine Querschnittfläche (s) auf der Fläche (12) aufweist, und wobei ein Verhältnis der Querschnittfläche (s) zu dem Intervall (t) mehr als 2,5 mm beträgt.

4. Artikel nach Anspruch 3, wobei die Querschnittfläche (s) mehr als 5 $mm^2$ beträgt.

5. Artikel nach Anspruch 3 oder Anspruch 4, wobei der Querschnitt von jedem der Löcher (11) auf der Fläche (12) kreisförmig ist, und wobei dessen Durchmesser (d) mehr als 2,5 mm beträgt.

6. Artikel nach einem der Ansprüche 1 bis 5, wobei das Intervall (t) kleiner als 2 mm ist.

7. Artikel nach einem der Ansprüche 1 bis 6, wobei der Anteil (10) ein äußerer Anteil ist, wobei vorzugsweise mindestens eines der gegenüber liegenden Enden von jedem der Löcher (11) sich nach außen öffnet, wobei bevorzugter mindestens eines der gegenüber liegenden Enden von jedem der Löcher (11) sich an die Außenseite öffnet.

8. Artikel nach einem der Ansprüche 1 bis 7, wobei der Artikel dafür vorgesehen ist, in Kontakt mit dem Grund zu kommen, wobei vorzugsweise die Fläche (12) einen von 0 Grad verschiedenen Winkel mit der Oberfläche des Grunds bildet, wobei die Fläche (12) bevorzugter im Wesentlichen senkrecht zu der Oberfläche des Grunds ist, wobei noch bevorzugter Löcher (11) in einer Vielzahl von Linien auf der Fläche (12) angeordnet sind, und wobei die Linien sich im Wesentlichen parallel zu der Oberfläche des Grunds erstrecken.

9. Artikel nach einem der Ansprüche 1 bis 8, wobei der Artikel ein Reifen, ein Schuh, ein Förderband oder eine Raupenkette ist, wobei der Artikel vorzugsweise ein Reifen (1) ist, wobei der Anteil (10) bevorzugter aus einer Lauffläche (2) eines Reifens (1) zusammengesetzt ist.

10. Artikel nach einem der Ansprüche 1 bis 9, wobei die Elastomermatrix mindestens ein Dienelastomer ausgewählt aus der Gruppe bestehend aus Naturkautschuk, synthetischen Polyisoprenen, Polybutadienen, Butadiencopolymeren, Isoprencopolymeren und Kombinationen davon umfasst.

11. Artikel nach einem der Ansprüche 1 bis 10, wobei die Menge an Verstärkungsfüllstoff mehr als 90 phr beträgt.

12. Artikel nach einem der Ansprüche 1 bis 11, wobei die Menge an Plastifiziermittel mehr als 25 phr beträgt.

13. Artikel nach einem der Ansprüche 1 bis 12, wobei das Gewichtsverhältnis des Verstärkungsfüllstoffs zu dem Plastifiziermittel kleiner als 6 ist.

14. Artikel nach einem der Ansprüche 1 bis 13, wobei das Produkt aus dem Intervall (t) und einem Gewichtsverhältnis des Verstärkungsfüllstoffs zu dem Plastifiziermittel zwischen 2 und 10 mm liegt.

15. Artikel nach einem der Ansprüche 1 bis 14, wobei die Kautschukzusammensetzung darauf basiert, dass sie kein Treibmittel enthält oder weniger als 5 phr, vorzugsweise weniger als 2 phr, bevorzugter weniger als 1 phr, noch bevorzugter weniger als 0,5 phr, insbesondere weniger als 0,1 phr eines Treibmittels enthält.

**Revendications**

1. Article, notamment un pneumatique, comprenant une portion (10) telle que la bande de roulement, comprenant une composition de caoutchouc à base d'au moins une matrice élastomère, une charge renforçante et un agent plastifiant ;

    **caractérisé en ce que** la partie (10) est pourvue d'une pluralité de trous (11), chacun s'étendant sensiblement perpendiculairement à une face (12) ; et
    les trous (11) répartis à un intervalle sensiblement égal (t) sur la face (12) ;
    dans laquelle un produit de l'intervalle (t) et un rapport pondéral de la charge renforçante à l'agent plastifiant est supérieur à 2 mm.

2. Article selon la revendication 1, dans lequel un rapport en volume des trous (11) à la partie (10) autre que les trous (11) est supérieur à 40 %.

3. Article selon la revendication 1 ou la revendication 2, dans lequel chacun des trous (11) a une surface en coupe transversale (s) sur la face (12), et dans lequel un rapport de la surface en coupe transversale (s) à l'intervalle (t) est supérieur à 2,5 mm.

4. Article selon la revendication 3, dans lequel la section transversale (s) est supérieure à 5 $mm^2$.

5. Article selon la revendication 3 ou la revendication 4, dans lequel la section transversale de chacun des trous (11) sur la face (12) est circulaire et dans lequel son diamètre (d) est supérieur à 2,5 mm.

6. Article selon l'une quelconque des revendications 1 à 5, dans lequel l'intervalle (t) est inférieur à 2 mm.

7. Article selon l'une quelconque des revendications 1 à 6, dans lequel la partie (10) est une partie externe, de préférence dans laquelle au moins une des extrémités opposées de chacun des trous (11) s'ouvre externellement, plus préférablement dans lequel au moins une des extrémités opposées les extrémités de chacun des trous (11) débouchent vers l'extérieur.

8. Article selon l'une quelconque des revendications 1 à 7, dans lequel l'article est destiné à entrer en contact avec le sol, de préférence dans lequel la face (12) forme un angle autre que 0 degré avec la surface du sol, plus préférentiellement dans lequel la face (12) est sensiblement perpendiculaire à la surface du sol, encore plus préférablement dans laquelle les trous (11) sont agencés en une pluralité de lignes sur la face (12), et dans lequel les lignes s'étendent sensiblement parallèlement à la surface du sol.

9. Article selon l'une quelconque des revendications 1 à 8, dans lequel l'article est un pneu, une chaussure, un convoyeur ou une chenille, de préférence dans lequel l'article est un pneu (1), plus préférablement dans lequel la partie (10) est constituée d'une bande de roulement (2) d'un pneu (1).

10. Article selon l'une quelconque des revendications 1 à 9, dans lequel la matrice élastomère comprend au moins un élastomère diénique choisi dans le groupe consistant en caoutchouc naturel, polyisoprènes synthétiques, polybutadiènes, copolymères de butadiène, copolymères d'isoprène et leurs combinaisons.

11. Article selon l'une quelconque des revendications 1 à 10, dans lequel la quantité de charge renforçante est supérieure à 90 pce.

12. Article selon l'une quelconque des revendications 1 à 11, dans lequel la quantité de plastifiant est supérieure à 25 phr.

13. Article selon l'une quelconque des revendications 1 à 12, dans lequel le rapport pondéral de la charge renforçante à l'agent plastifiant est inférieur à 6.

14. Article selon l'une quelconque des revendications 1 à 13, dans lequel le produit de l'intervalle (t) et d'un rapport pondéral de la charge renforçante à l'agent plastifiant est compris entre 2 et 10 mm.

15. Article selon l'une quelconque des revendications 1 à 14, dans lequel la composition de caoutchouc est à base d'aucun agent gonflant ou à base de moins de 5 phr, de préférence moins de 2 phr, plus préférablement moins de

1 phr, encore plus préférablement moins de 0,5 phr, notamment inférieure à 0,1 pce, d’un agent gonflant.

[Fig. 1]

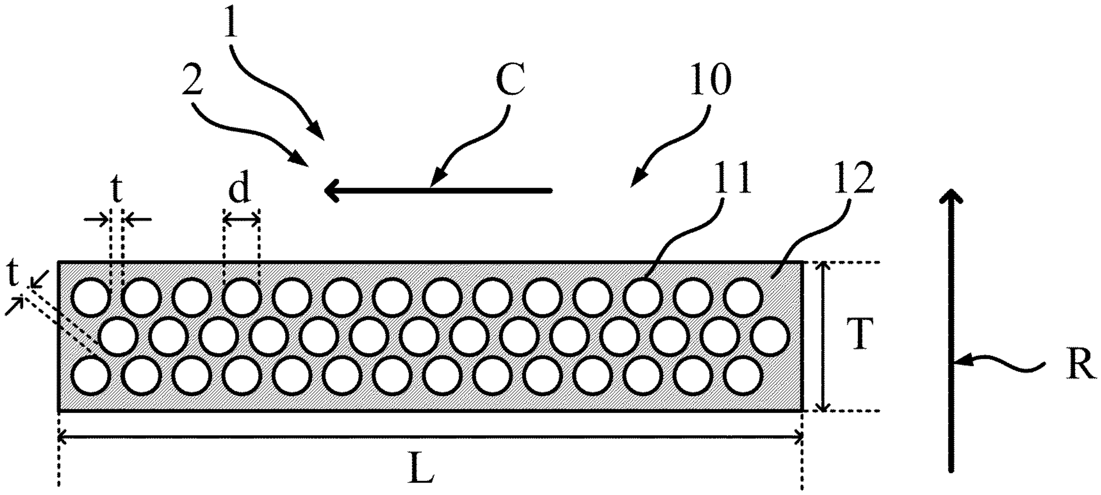


[Fig. 2]

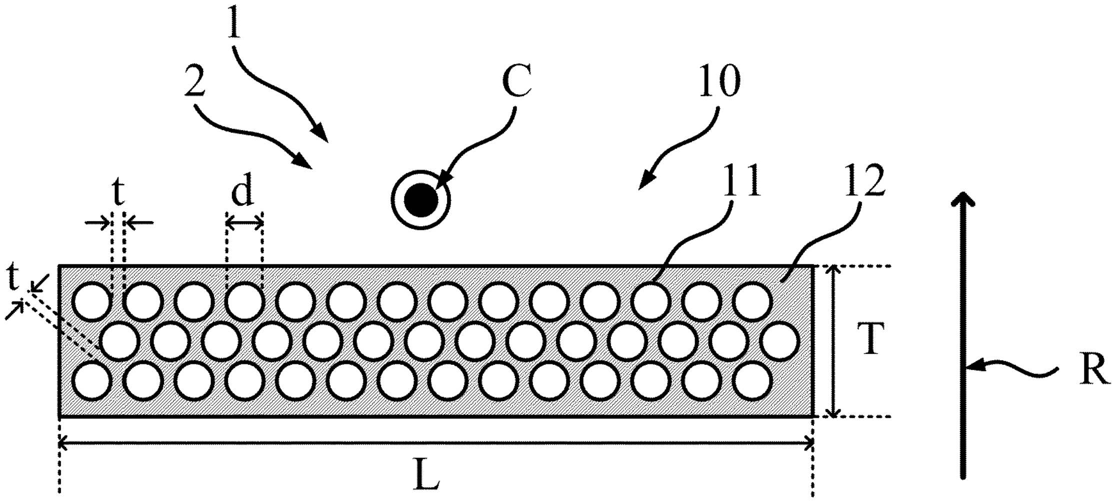

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010069510 A
- WO 9736724 A
- WO 9916600 A
- WO 03016387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A
- EP 0925007 A
- WO 2012164002 A


### Non-patent literature cited in the description


- *The Journal of the American Chemical Society,* February 1938, vol. 60, 309